# EUROPEAN PATENT APPLICATION

(11) **EP 4 091 703 A1**
(43) Date of publication of application: **23.11.2022**
(21) Application number: 21020262.8
(22) Date of filing: 19.05.2021
(51) Int. Cl.: B01F 3/08, B01F 5/04, B01F 3/04

(54) **DEVICE AND METHOD FOR INTRODUCING A LIQUID COMPRISING A DISSOLVED GAS INTO AN AQUEOUS LIQUID STREAM**

(71) Applicant: Linde GmbH, 82049 Pullach (DE)
(72) Inventor: Obermeyer, Heinz-Dieter, Freising (DE); Gurney, Darren, London, SW19 (GB)
(74) Representative: Lu, Jing

(57) **Abstract**

Device for introducing a liquid comprising a dissolved gas into an aqueous liquid stream flowing through a mainstream pipe, the device comprising a sidestream pipework comprising a device (240,250) for dissolving a gas in an aqueous liquid and a dispersion nozzle (110) adapted to be fixedly attached to the mainstream pipe (210) such that an inlet side (110b) of the dispersion nozzle (110) is arranged on the outside of the mainstream pipe (210), and an outlet side (110c) of the dispersion nozzle (110) comprising a plurality of holes (130) is arranged within the mainstream pipe, the dispersion nozzle (110) being further adapted to receive a liquid comprising a dissolved gas through the inlet side (110b) and to eject said liquid into the aqueous liquid stream flowing through the mainstream pipe (210) at the outlet side (110c) through the plurality of holes (130).

## Description

The invention relates to a device for introducing a liquid comprising a dissolved gas into an aqueous liquid stream and a corresponding method.

The mixing of liquids comprising a dissolved gas, i.e. dissolved gas solutions, into large bore pipes, vessels or other confined ducts or pipes is, in practice, performed taking into account jet mixing properties and mass transfer theory.

Mass transfer and dissolution of gases in water, for example carbon dioxide (CO₂) in aqueous mediums such as clean water, wastewater, permeate from reverse osmosis RO or other desalination processes typically use venturi or other gas-liquid contacting devices mounted in a sidestream injection system. The subsequent introduction of such dissolved gas solutions into mainstream pipes with a large cross sectional area can lead to pressure drop effects, which may cause de-gassing, and also poor mixing quality of the dissolved gas solution within the bulk-flow of aqueous liquid flowing through the mainstream pipe due to poor jetting action.

The effect of de-gassing in the mainstream at the point of introduction into the bulk flow has the potential to separate the gas from the gas solution and promote coalescence into larger bubbles, that can then form slug or gassy flow patterns within the mainstream pipe. The formation of gas at such introduction points also reduces the effectiveness of mass transfer and reduces efficiency to the point where the desired benefits of adding the gas are not achieved to a sufficient degree. The net effect in such prior art solutions can be that the performance of the entire facility may be negatively impacted resulting in the envisaged production or output not being achieved.

In prior art applications, dissolved gas solutions are generated in a sidestream injection configuration, and the resulting mixture is introduced into the bulk flow pipe by means of a simple pipe entry into the mainstream pipe, either perpendicularly to the flow within the mainstream pipe or at an angle of between 45 to 30 degrees. This method is, for example, typically used to introduce a solution of carbonic acid into water or RO permeate.

The present invention attempts to achieve an improvement in the quality of mixtures, in which dissolved gas solutions are introduced into a mainstream flowing through a mainstream pipe.

To this effect, the present invention suggests a device including the features of claim 1, a nozzle including the features of claim 7, a system including the features of claim 8 and a method including the features of claim 9.

The device according to the invention for introducing a liquid comprising a dissolved gas into an aqueous liquid stream flowing through a mainstream pipe comprises a sidestream pipework comprising a device for dissolving a gas in an aqueous liquid and a dispersion nozzle adapted to be permanently attached to the mainstream pipe by appropriate connections & applied techniques,such that an inlet side of the dispersion nozzle is arranged on the outside of the mainstream pipe, and an outlet side of the dispersion nozzle comprising a plurality of holes is arranged within the mainstream pipe, the dispersion nozzle being further adapted to receive a liquid comprising a dissolved gas through the inlet side and to eject said liquid into the aqueous liquid stream flowing through the mainstream pipe at the outlet side through the plurality of holes.

Advantageous embodiments of the invention are the subject-matter of the dependent claims.

According to a preferred embodiment, the outlet side of the dispersion nozzle has a main direction of extension extending in a direction perpendicular to a flow direction of the aqueous liquid stream flowing through the mainstream pipe. This arrangement provides an effective distribution of dissolved gas within the liquid flowing through the mainstream pipe.

Advantageouly, the holes are arranged in a number of directions extending parallel to the main direction of extension of the outlet side of dispersion nozzle. This arrangement further adds to the effectivity of dissolvd gas distribution.

Expediently, the holes are provided in the outlet side of dispersion nozzle at various angles relative to the flow direction of the aqueous liquid stream. In other words, assuming the outlet side of the dispersion nozzle extends perpendiculary to the direction of flow in the mainstream pipe and the outlet side has a cylindrical cross section, such that the angular position of the outlet side first impinged on by the mainstream (i.e. the section of the outlet side furthest upstream relative to the flow of the mainstream) is at 270 degrees, the angular positions of the outlet side at which the outlet side is at its widest relative to the flow of the mainstream are at 0 degrees and 180 degrees, and the angular position of the outlet side furthest downstream relative to the flow of the mainstream is 90 degrees, the holes extend along directions or lines at angular positions of between 60 and 0 degrees, as well as between 120 and 180 degrees.

Advantageously, the device is adapted to introduce dissolved CO₂, i.e. carbonic acid into an aqueous liquid stream. Carbonic acid is required for numerous industrial processes, leading to a wide range of applications for the present invention.

Expediently, the inlet side of nozzle is connected to a sidestream adapted to dissolve gas in a liquid.

A nozzle according to the invention comprises an inlet side adapted to receive a liquid comprising a dissolved gas and an outlet side adapted to eject said liquid comprising a dissolved gas into the aqueous liquid flow through a plurality of holes, the plurality of holes being arranged in a number of directions extending parallel to a main extension direction of the outlet side.

A system according to the invention comprises a device as decribed above and a mainstream pipe.

The method accoding to the invention for introducing a liquid comprising a dissolved gas into an aqueous liquid stream, comprises the steps of
dissolving gas in a liquid within a sidestream pipework, and introducing the liquid comprising a dissolved gas into an aqueous liquid stream flowing through a mainstream pipe utilizing a device according to the invention, especially a device according to one of the advantageous embodiments as described.

Advantageous embodiments of the invention will now be described referring to the appended figures.
FIG. 1 shows a schematical side view of a preferred embodiment of the invention,
FIG. 2 shows a schematic side view of a second embodiment of the invention,
FIG. 3 shows a sectional view of a mainstream pipe together with a preferred embodiment of a nozzle according to the invention,
FIG. 4 shows an arrangement of holes as included in the embodiment of FIG. 3 in more detail, and
FIG. 5 shows a schematic sectional view through a nozzle of a preferred embodiment of the invention.

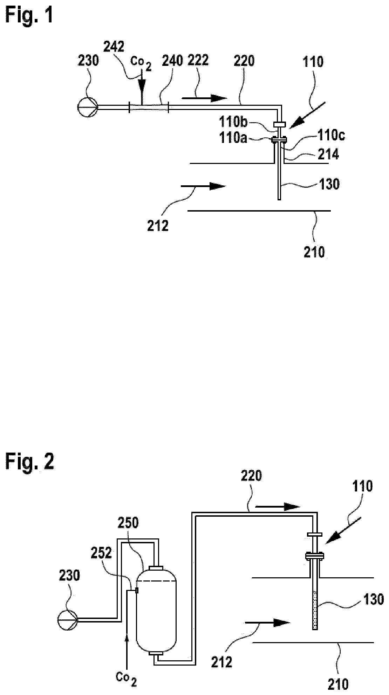

In FIG. 1, there is shown a mainstream pipe 210, through which a flow of aqueous liquid, for example clean water, wastewater, permeate from RO or other desalination processes is transported. The direction of flow is, for ease of reference, depicted by arrow 212. The mainsteam pipe 210 is provided as a cylindrical casing, which is provided with a connection port 214. This connection port is adapted to fixedly attach a dispersion nozzle 110 to the mainstream pipe 210. The connection port 214 can, for example, be provided as a flanged connection port, to which a flange 110a of dispersion nozzle 110 is fixedly connectable.

Dispersion nozzle 110 is provided with an inlet side 110b and outlet side 110c. The connection between inlet side 110b and outlet side 110c may be provided by respective flanges. It is also possible to provide dispersion nozzle 110 as an integral component.

Inlet side 110b of dispersion nozzle 110 is connected to a sidestream pipework 220, provided with a pump 230 for pumping motive water through pipework 220 and a venturi gas-liquid contactor 240, serving as a device for dissolving a gas in the movive water, with an inlet port for adding CO₂ to the motive water transported through pipework 220 in direction of arrow 222. A venturi gas-liquid contactor is a common means for generating dissolved gas solutions.

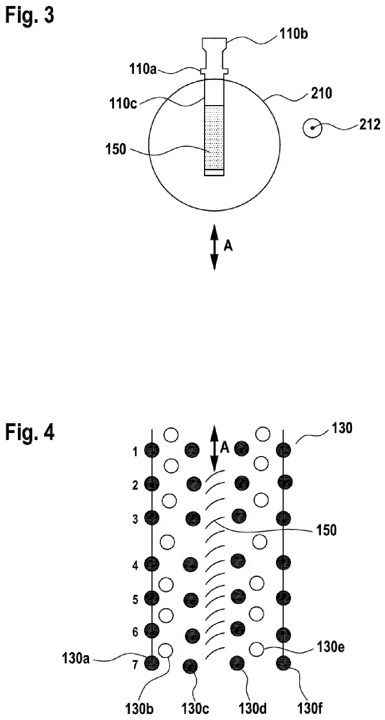

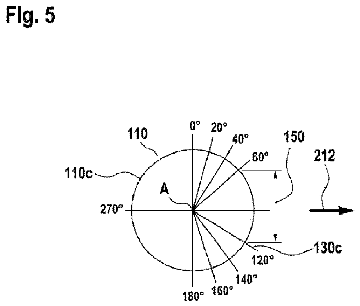

The outlet side 110c of dispersion nozzle 110 extends into the mainstream pipe 210. The outlet side 110c is provided with a plurality of holes 130, advantageous arrangements of which will be described in connection with Figs. 4 and 5 below, through which dissolved CO₂ solution passes into the aqueous liquid flowing through mainstream pipe 210. In the embodiments shown in Fig. 1 as well as Fig. 2, the outlet side 110c extends in a direction A radially relative to the cylindrical cross section of mainstream pipe 210, i.e. essentially perpendicularly to the main extension direction of mainstream pipe or flow direction 212.

To summarize, by means of the described arrangement, motive water pumped by pump 230 is transported to contactor 240, where CO₂ is added in order to provide a dissolved gas solution, i.e. CO₂ in motive water, from where it is transported to dispersion nozzle 110, where it is dispersed into the main flow flowing through mainstream pipe 210.

The embodiment shown in Fig. 2 differs from the embodiment shown in Fig. 1 only in that instead of a venturi gas-liquid contactor 240 a pressure reactor 250 is provided, via which CO₂ is added to the motive water passing therethrough via inlet 252.

Dispersion nozzle 110 is shown in greater detail in Fig. 3. Here, a cross-sectional view of mainstream pipe 210 is shown. Be it assumed that the direction of flow 212 as shown in Figs. 1 and 2 is out of the page i.e. towards the observer. It can be seen that, according to a preferred embodiment especially visible in Fig. 4, the holes 130 are arranged in directions or lines, designated 130a - 130f for ease of reference, extending parallel to the main extension direction A of dispersion nozzle 110, i.e. perpendicularly to the direction of flow 212 of the mainstream. In the viewing direction of Figs. 3 and 4, the central section 150 of dispersion nozzle 110 is not provided with holes. The angular positions of lines 130a - 130f are shown in Fig. 5, which depicts a cross-sectional view of dispersion nozzle 110. For ease of reference, Fig. 5 also shows flow direction 212 as depicted in Figs. 1 and 2, as well as various angular directions relative to the direction of flow, as will be further explained in the following.

As mentioned, the outlet side 110c of the dispersion nozzle 110 extends perpendiculary, i.e. in direction A, to the direction of flow 212 in the mainstream pipe and the outlet side has a cylindrical cross section. The angular position of the outlet side first impinged on by the mainstream (i.e. the section of the outlet side furthest upstream relative to the flow of the mainstream) is defined to be at 270 degrees, such that the angular positions of the outlet side at which the outlet side is at its widest relative to the flow of the mainstream are at 0 degrees and 180 degrees, and the angular position of the outlet side furthest downstream relative to the flow of the mainstream is at 90 degrees. Based on this definition, the holes 130 extend along directions or lines at angular positions of between 60 and 0 degrees, as well as between 120 and 180 degrees.

As can be seen in Figure 5, lines 130a - 130f are, in this notation, provided at angles of 160°, 140°, 120°, 60°, 40° and 20° respectively.

Advantageously, the angle of the holes thus arranged are provided over an 180° arc with a middle spacing, corresponding to central area 150, of approximately 120° (i.e. from 60° to 120° in the notation of Fig. 5), where no holes are provided.

The provision of such a system. i.e. a dispersion nozzle provided in a mainstream pipe in conjunction with a pressurized sidestream pipework arrangement, within which a gas such as CO₂ is dissolved in a liquid by means of a venturi gas-liquid contactor 240 or an adapter or a static mixer or a pressure vessel 250 provides a highly effective means of uniformly dispersing a dissolved gas solution in a mainstream pipe. In practice, even after leaving the venturi-gas liquid contactor 240 or the pressure reactor 250, gas continues to be dissolved in the pipework, and is, in practice, fully dissolved in the motive liquid by the time it is introduced into the mainstream pipe by means of dispersion nozzle 110.

The provision of a dispersion nozzle within a mainstream pipe provides an effective method for mixing a dissolved gas solution, especially a carbonic acid solution, throughout the cross-sectional area of the flow through the mainstream pipe, where the available mixing turbulence is relatively low, in a shorter distance than would be achieved by just introducing the mixture at a side wall of the pipe from sidestream pipework 220.

By implementing the current invention, pressure drops between the sidestream pipework 220 and the flow within the mainstream pipe 210 can be minimized, so that the amount of gas coming out of solution can also be kept low. At the same time, the invention provides intimate mixing and dilution into the mainstream flow by creating sufficient turbulence and mixing influence or interaction in the downstream flow volume.

The nozzle 110 is designed to both distribute, mix and disperse the dissolved gas by producing an effective mixing regime, at the same time minimizing, as mentioned, pressure drops around the nozzle, that would initiate significant de-gassing.

Accordingly, the size, number and orientation of the holes 130 provided in nozzle 110 is designed based on a number of hydrodynamic factors, fluid properties, water chemistry and gas-liquid ratio, such that pressure drop effects such as de-gassing can be minimized. The invention provides better transfer efficiency for carbonated water and mixing to achieve target water quality needed to meet drinking water thresholds as specified in corresponding legislation. A better dispersion of carbonic acid to provide a more consistent reaction with other water treatment chemicals, such as coagulants, lime, chlorination compounds and other reagents can also be achieved.

Also, CO₂ consumption can be optimized, as a larger fraction of CO₂ introduced into the liquid can be completely mixed before introduction of other reagents such as lime, so that, for example, so-called "hotspots", where a pH is locally above or below an optimum value, can be avoided.

The invention also makes possible a reduction in the length of pipework needed to achieve complete mixing downstream of the so-called reaction zone, where other water chemicals are metered or introduced into the mainstream. Optimized mixing provides better control of process reactions, whereby final water quality can be improved.

The invention is especially usable in connection with RO permeate and wastewater applications for a number of pipe sizes, preferably in connection with desalination and drinking water treatment projects.

## Claims

1. Device for introducing a liquid comprising a dissolved gas into an aqueous liquid stream flowing through a mainstream pipe, the device comprising a sidestream pipework comprising a device (240,250) for dissolving a gas in an aqueous liquid and a dispersion nozzle (110) adapted to be fixedly attached to the mainstream pipe (210) such that an inlet side (110b) of the dispersion nozzle (110) is arranged on the outside of the mainstream pipe (210), and an outlet side (110c) of the dispersion nozzle (110) comprising a plurality of holes (130) is arranged within the mainstream pipe, the dispersion nozzle (110) being further adapted to receive a liquid comprising a dissolved gas through the inlet side (110b) and to eject said liquid into the aqueous liquid stream flowing through the mainstream pipe (210) at the outlet side (110c) through the plurality of holes (130).

2. Device according to claim 1, wherein the outlet side (110c) of the dispersion nozzle (110) has a main direction of extension extending in a direction (A) perpendicular to a flow direction of the aqueous liquid stream flowing through the mainstream pipe (210).

3. Device according to any one of the preceding claims, wherein the holes (130) are arranged in a number of directions (130a - 130f) extending parallel to the main direction of extension (A) of the outlet side (110c) of dispersion nozzle (110).

4. Device according to claim 3, wherein the holes (130) are provided in the outlet side of dispersion nozzle (110) at various angles relative to the flow direction of the aqueous liquid stream.

5. Device according to any one of the preceding claims, adapted to introduce dissolved carbonic acid into the aqueous liquid stream.

6. Device according to any one of the preceding claims, wherein the inlet side (110b) of nozzle (110) is connected to a sidestream adapted to dissolve gas in a liquid.

7. Nozzle for introducing a liquid comprising a dissolved gas into an aqueous liquid flow, comprising an inlet side (110b) adapted to receive a liquid comprising a dissolved gas and an outlet side (110c) adapted to eject said liquid comprising a dissolved gas into the aqueous liquid flow through a plurality of holes, the plurality of holes being arranged in a number of directions (130a - 130f) extending parallel to a main extension direction of the outlet side.

8. System comprising a device according to any one of claims 1 to 6 and a mainstream pipe.

9. Method for introducing a liquid comprising a dissolved gas into an aqueous liquid stream, comprising the following steps:
Dissolving gas in a liquid within a sidestream pipework, and introducing the liquid comprising a dissolved gas into an aqueous liquid stream flowing through a mainstream pipe utilizing a device according to any one of the preceding claims 1 to 6.
